# EUROPÄISCHE PATENTSCHRIFT

(11) **EP 3 616 488 B1**
(45) Veröffentlichungstag und Bekanntmachung des Hinweises auf die Patenterteilung: **06.04.2022**
(21) Anmeldenummer: 19191013.2
(22) Anmeldetag: 09.08.2019
(51) Int. Cl.: A01B 76/00, A01B 79/00

(54) **ADAPTIVE BEDIENVORRICHTUNG UND VERFAHREN ZUR ADAPTION EINER BEDIENVORRICHTUNG**
ADAPTIVE OPERATING DEVICE AND METHOD FOR ADAPTING AN OPERATING DEVICE
DISPOSITIF DE COMMANDE ADAPTATIF ET PROCÉDÉ D'ADAPTATION D'UN DISPOSITIF DE COMMANDE

(30) Priorität: 24.08.2018 DE 102018120732
(43) Veröffentlichungstag der Anmeldung: 04.03.2020
(73) Patentinhaber: elobau GmbH & Co. KG, 88299 Leutkirch im Allgäu (DE)
(72) Erfinder: Kaufmann, Andreas, 70197 Stuttgart (DE); Schempp, Timo, 70567 Stuttgart (DE); Schmid, Markus, 70771 Leinfelden-Echterdingen (DE); Stöhr, Ingmar, 88317 Aichstetten (DE)
(74) Vertreter: VKK Patentanwälte PartG mbB

(56) Entgegenhaltungen:
- EP-A1- 1 417 875
- EP-A1- 2 875 708
- DE-U1-202012 006 899

## Beschreibung

Die vorliegende Erfindung betrifft eine adaptive Bedienvorrichtung für landwirtschaftliche Traktoren und ein Verfahren zur Adaption einer Bedienvorrichtung.

Traktoren sind insbesondere in der Landwirtschaft, aber auch im Bauwesen und in der Forstwirtschaft essentieller Bestandteil eines jeden Gerätebestands. Traktoren stellen unterschiedliche Antriebe zur Verfügung, sind mobil und haben sich daher als universelles Werkzeug etabliert, mit dem die unterschiedlichsten Arbeitsvorrichtungen betreibbar sind. Hierbei werden unter dem Begriff Arbeitsvorrichtungen neben Geräten wie Holzspaltern, Sägen, Winden, Balkenmähern, Pflügen, Grubbern und ähnlichem auch mit Rädern versehene Arbeitsvorrichtungen wie Ladewagen, Miststreuer, Güllefässer, Futterwagen, Rübenroder, Ballenpressen und andere mehr verstanden.

Wie diese kurze Aufzählung bereits zeigt, muß ein Traktor neben den normalen Bedienelementen - auch als HMI (Human-machine-interface) bezeichnet - für seine Bewegungssteuerung auch eine Vielzahl von Bedienelementen zur Bedienung der jeweiligen Arbeitsvorrichtung aufweisen.

Diese Bedienelemente sind bislang stets den unterschiedlichen Antrieben und Hebewerken zugeordnet, beispielsweise Zapfwellen vorn und/oder hinten, Hydraulikanschlüssen, Druckluftanschlüssen, sofern zu bedienen, Heck- und/oder Fronthubwerk (Dreipunktkraftheber) und üblicherweise neben dem Fahrersitz in einer Bedienarmablage zusammengefasst.

Dieser Bedienbereich weist neben Drehreglern, Tastern, Schaltern üblicherweise auch einen oder mehrere Joysticks als Bedienelement auch einen Monitor als Anzeigeelement auf, wobei die Bedienelemente auch hinterleuchtet und damit ebenfalls als Anzeigeelement ausgebildet sein können. Diese bekannten Bedienelemente steuern unveränderbar bestimmte Einrichtungen des Traktors, beispielsweise die Auf-AbBewegung des Heckhubwerks. Die standardisierten Bedienvorrichtungen des Standes der Technik sind zu grundlegenden, generischen Funktionengruppen zusammengefaßt, insbesondere den Funktionengruppen zur Bedienung der Dreipunktaufhängung, der Zapfwelle und selektiver Kontrollventile zur Bedienung hydraulischer Zylinder und Motoren. Ein Bediener sieht sich somit einer Vielzahl von Bedienelementen gegenüber, ohne weiteres bis zu 50, die generisch beschriftet sind, beispielsweise mit "Hydraulikkreis 2". Hat ein Bediener sich nicht gemerkt, wie er die Arbeitsvorrichtung an den Traktor angeschlossen hat oder übernimmt er von einem anderen Benutzer einen Traktor mit bereits angeschlossener Arbeitsvorrichtung, muß er sich durch eine Vielzahl von Kombinationen durcharbeiten, bevor er die für die Arbeitsvorrichtung relevanten Bedienelemente ermittelt und auch deren Betätigungsrichtung herausgefunden und sich diese dauerhaft eingeprägt hat. Fehlbedienungen und Zeitvergeudung sind damit fast zwangsläufig, da man dem Bedienelement "Hydraulikkreis 2" nicht ansieht, ob und welche Funktion der Arbeitsvorrichtung es wie steuert. Es ist auch ohne weiteres normal, dass ein Bedienelement rechts/links bewegt wird, aber eine Funktion auf/ab steuert. Ein Benutzer sieht sich demnach der Schwierigkeit gegenüber, seine Erwartungshaltung nicht kompatibel zur Bedienung zu finden. Aus den Dokumenten DE 20 2012 006899 U1, EP 2 875 708 A1 und EP 1 417 875 A1 sind Bedienvorrichtungen für landwirtschaftliche Traktoren bekannt.

Der Vorteil, dass für einen Bediener alle Bedienelemente einer Funktionengruppe zusammengefaßt sind, hat jedoch neben den beschriebenen auch den Nachteil, dass ggf. ein häufiger Positionswechsel seiner Bedienhand, bzw. seines Bedienarms von Funktionsgruppe zu Funktionsgruppe erforderlich ist.

Die vorliegende Erfindung stellt sich daher die Aufgabe, diesen Nachteil zu vermeiden und eine entsprechende Vorrichtung und ein Verfahren anzugeben.

Die Vorrichtungsaufgabe wird gelöst durch eine adaptive Bedienvorrichtung für landwirtschaftliche Traktoren, aufweisend zwei oder mehr Bedienbereiche, wobei jeder Bedienbereich mindestens ein manuell bedienbares körperliches Bedienelement aufweist, wobei die Bedienvorrichtung eine Erkennungsvorrichtung aufweist, die die Art einer an den Traktor im Benutzungsfall angekoppelten Arbeitsvorrichtung erkennend ist, wobei die Bedienvorrichtung weiter eine mit der Erkennungsvorrichtung zusammenwirkende Konfigurationsvorrichtung aufweist, die die Funktionalität eines Bedienelements und/oder eines Bedienbereiches in Abhängigkeit von der Art der angekoppelten Arbeitsvorrichtung konfigurierend ist, wobei die Bedienvorrichtung weiter mindestens ein Anzeigeelement aufweist, das im Benutzungsfall eine Konfiguration eines Bedienbereichs anzeigend ist, wobei je nach Konfiguration wenigstens ein Bedienelement in seiner räumlichen Lage veränderbar und/oder in Richtung und/oder Umfang seiner Bewegung konfigurierbar ist.

Die Erfindung ermöglicht mit großem Vorteil die Verwendung ein und desselben Bedienelements zum Ausführen ganz unterschiedlicher Funktionen, deren Art im Benutzungsfall in Abhängigkeit von der jeweils angekoppelten Arbeitsvorrichtung festgelegt werden. So ist es erfindungsgemäß einem Benutzer ermöglicht, mit ein und demselben Bedienelement bei einer Arbeitsvorrichtung ein Fronthubwerk anzuheben/abzusenken, bei einer anderen Arbeitsvorrichtung die Zapfwelle vorne/hinten drehen zu lassen/anzuhalten oder bei einer dritten Arbeitsvorrichtung ein Hydraulikventil zu öffnen/schließen. Hierfür erforderlich ist die erfindungsgemäße Erkennungsvorrichtung, die im einfachsten Fall eine Dateneingabeeinheit ist, der ein Benutzer selber beispielsweise mittels Tastatur, Sprachbefehl, Touchscreen mitteilt, welche Arbeitsvorrichtung angekoppelt ist. Die Erkennungsvorrichtung kann dabei erfindungsgemäß auch eine Schnittstelle sein, durch die die Vorrichtung die entsprechende Information erhält, beispielsweise von einem internen Kommunikationsbus des Traktors und damit von einem anderen Steuergerät.

Diese Erkennungsvorrichtung ist dann diese Information an eine Konfigurationseinheit weiterleitend, bei der zu jedem Arbeitsgerät die entsprechenden Konfigurationen des einen oder mehreren Bedienelements einer Bedieneinheit hinterlegt ist und diese dann eine entsprechende Konfiguration ausführend ist. Das erfindungsgemäß vorhandene Anzeigegerät, das wiederum ein Monitor, eine Leuchteinheit oder anderes sein kann, ist dann die gewählte Konfiguration dem Benutzer anzeigend. Mit dieser Erfindung ist es nun möglich, einen, mehrere oder alle Bedienelemente einer Bedieneinheit passend zu einer Arbeitsvorrichtung zu konfigurieren und diese Konfiguration dem Benutzer mitzuteilen.

Die möglichen Konfigurationen der Bedienelemente, nach denen sie in ihrer räumlichen Lage oder in ihrem Umfang und der Richtung der Bewegung eingeschränkt oder allgemein verändert sind, gelten grundsätzlich für alle Bedienelemente, sind jedoch bei den bereits erwähnten Joysticks besonders relevant. Hier wäre beispielsweise eine der horizontalen Bewegungsachsen sperr- oder freigebbar, eine Druckfunktion in z-Richtung sperr- oder freigebbar oder das Maß einer Bewegung in entlang einer oder beider horizontalen Bewegungsachsen veränderbar, beispielsweise beschränkbar. Mit besonders großem Vorteil führt eine solche grundsätzliche Veränderbarkeit des Bedienelements dazu, dass die Erwartungshaltung eines Benutzers erfüllbar ist, also eine rechts/links-Drehung des Bedienelements auch eine Rechts/LinksBewegung der Arbeitsvorrichtung auslöst und steuert. Das Bedienelement ist damit erfindungsgemäß so konfigurierbar, dass es benutzererwartungs- und arbeitsvorrichtungsbewegungskompatibel ist. Hierzu zählt erfindungsgemäß auch eine variable Anordnung des Bedienelements im Bedienbereich, also dessen grundsätzliche Veränderbarkeit in seiner räumlichen Lage innerhalb des Bedienbereichs.

Mit besonderem Vorteil ist es so einem Benutzer ermöglicht, ohne Änderung seiner Arm-, bzw. Handgelenklage an ein und derselben Bedieneinheit unterschiedlichste Arbeitsvorrichtungen zu steuern.

In Ausgestaltung der Erfindung ist vorgesehen, dass ein erster Bedienbereich so konfiguriert ist, dass dessen mindestens eines Bedienelement die arbeitsvorrichtungstypisch am häufigsten anfallenden Bedienbewegungen steuernd ist und dass ein zweiter und jeder weitere Bedienbereich so konfiguriert sind, dass dessen jeweilige eine oder mehrere Bedienelemente die arbeitsvorrichtungstypisch am zweithäufigsten, dritthäufigsten, n-häufigsten anfallenden Bedienbewegungen steuernd sind. Mit ganz großem Vorteil ermöglicht damit die Erfindung, die häufigsten Bedienfunktionen einer Arbeitsvorrichtung in einem Bedienbereich zu konzentrieren, der einer Ruhelage eines Bedienerarms am nächsten liegt, bzw. in der Ruhelage angeordnet ist. Bei einem Pflug als Arbeitsvorrichtung wäre dies beispielsweise eine Auf- und Abbewegung des Heckhubwerks. Eine zweithäufigste Bedienfunktion wäre beispielsweise das Rotieren/Verschwenken des Kehrpfluges, so dass danach dessen andere Pflugschare operativ sind. Diese und ggf. andere, zweithäufigste Funktionen sind erfindungsgemäß einem zum ersten benachbarten Bedienbereich und dessen Bedienelementen zugeordnet, so dass bereits eine geringe Bewegung eines Benutzers ausreicht, diese sekundären Funktionen auszuführen. Ggf. vorhandene, dritthäufigste Funktionen wären erfindungsgemäß dann einem dritten Bedienbereich und dessen Bedienelementen zugeordnet, so dass ein Benutzer eine größere Bewegung ausführen muß, um diese Funktionen auszuführen. Da derartige Funktionen während eines Arbeitsganges jedoch seltener auszuführen sind, ergibt sich insgesamt eine hohe Ergonomie für einen Benutzer. Dies ist immer dann besonders wichtig, wenn dieser für einen langen Zeitraum, insbesondere für mehrere Stunden mit der Arbeitsvorrichtung arbeiten muß. Derartige Fälle treten zum Beispiel sehr häufig bei landwirtschaftlichen Lohnunternehmen auf, deren Traktorfahrer ganze Arbeitstage mit der Übernahme von geernteten Mais, Getreide, Raps, Gras, etc. von Mähdreschern oder Feldhäckslern in ihre angehängten Ladewagen und deren Abfuhr beschäftigt sind.

Sind die Bedienbereiche als benachbarte, insbesondere kreissegmentartige, Bereiche ausgebildet, insbesondere derart, dass sie für einen Benutzer im Benutzungsfall durch Rotation im Ellenbogengelenk und/oder Handgelenk bedienbar erreichbar angeordnet sind, so wird mit großem Vorteil eine besonders ergonomische Bedienung erreicht. Die erfindungsgemäße kreissegmentartige Anordnung bedeutet dabei nicht nur eine Anordnung im streng mathematischen Sinne, erfasst sind alle, auch ovale, elliptische oder allgemein krumme Anordnungen der Bedienbereiche, sofern diese über eine überwiegende Rotations/Schwenkbewegung eines Benutzerarms für dessen Finger erreichbar sind.

In Weiterbildung der Erfindung ist vorgesehen, dass der erste Bedienbereich, insbesondere dessen Bedienelement, von einer nicht rotierten Position eines Bedienerarms aus bedienbar erreichbar ist und/oder dass zweite, dritte oder weitere Bedienbereiche mit jeweils stärkerer Rotation bedienbar erreichbar ausgebildet sind.

Weist jeder Bedienbereich ein Anzeigeelement auf, so ist dem Benutzer einfach und deutlich signalisiert, welche Funktion gerade dem oder den Bedienelementen zugeordnet ist. Anstelle eines großen Anzeigeelements, wie es ein üblicherweise vorhandener großer Bildschirm darstellt, sind erfindungsgemäß auch kleine, insbesondere LED-basierte, nicht berührungsempfindliche Bildschirme. Dies hat den Vorteil, dass das Bedienelement nun anstelle von "Hydraulikkreis 2" je nach Arbeitsvorrichtung mit "Senken/Heben Pflugschar" oder "Ballenförderung ein/aus" beschriftet ist, bzw. entsprechend angezeigt wird.

Weist die Vorrichtung wenigstens einen Joystick als Bedienelement eines Bedienbereiches oder unabhängig von diesen auf, so lassen sich besonders viele Funktionen in dieses Bedienelement integrieren, da dieses über mehrere Achsen steuernd ist.

In Weiterbildung der Erfindung ist vorgesehen, dass je nach Konfiguration wenigstens ein Bedienelement in seiner Funktion ein- oder ausschaltbar Zu der genannten Konfiguration ist erfindungsgemäß auch ein Versenken oder anderweitig erreichbare Nicht-Zugänglichkeit des Bedienelement zu rechnen und damit das Ausschalten seiner Funktionalität. Dies reduziert die Anzahl der für einen Benutzer sichtbaren Bedienelemente auf die gerade für die jeweils anstehende Tätigkeit notwendigen.

Die erfindungsgemäß konfigurierbaren Bedienelemente weisen dabei eine Funktion auf, die gewählt aus der Gruppe gebildet durch die Grundfunktionen: vor/zurück, rechts/links, hoch/runter, an/aus, offen/zu, mehr/weniger, im Uhrzeigersinn oder gegen den Uhrzeigersinn rotieren/schwenken. Diese Aufzählung ist dabei nicht abschließend zu verstehen, beispielsweise könnte eine besondere Arbeitsvorrichtung auch eine besondere, nicht erwähnte Grundfunktion aufweisen.

Mit großem Vorteil ordnet die Erfindung nicht länger Bedienelemente fest bestimmten Traktorfunktionen zu, sondern einer Primär-, Sekundär- oder Tertiärfunktion eines Arbeitsgeräts zu, unabhängig davon, durch welche Traktorfunktion dieses erreicht werden. Ein und dasselbe Bedienelement kann daher erfindungsgemäß durch Umkonfiguration zeitlich nacheinander und in Abhängigkeit von der Arbeitsvorrichtung ganz unterschiedliche Traktorfunktionen steuern. Ein und dasselbe Bedienelement steuert demnach erfindungsgemäß mal das Heckhubwerk, mal die Zapfwelle, mal ein Hydraulikventil und ist mal ohne Funktion. Hierzu weist die Vorrichtung eine Datenbank auf, in der die entsprechenden Daten der einzelnen Arbeitsvorrichtungen hinterlegt sind und auf die die Vorrichtung zur Zuweisung zugreift. Die Datenbank sowie entsprechende Rechner und Datenerfassungseinheiten sind ebenfalls Teil der erfindungsgemäßen Vorrichtung. Zu dieser Datenbank gehören entsprechend auch ein oder mehrere Datenerfassungsmodule, insbesondere in Form einer Eingabeeinheit, die entweder automatisch die Arbeitsvorrichtung erkennt, oder bei der manuell eine Dateneingabe erfolgt, beispielsweise in Form einer Auswahl der Arbeitsvorrichtung aus einer Tabelle oder Übersicht. Wie bereits geschildert, können die benötigten Informationen auch über ein Bussystem der Arbeitsvorrichtung selber oder des Traktors mitgeteilt werden, so dass die Erkennungsvorrichtung eine Datenschnittstelle ist, die gleichzeitig auch ein Datenerfassungsmodul ist. In diesem Fall wären Eingabeeinheit und ggf. andere Steuergeräte mehr dem Traktor oder der Arbeitsvorrichtung zuzuordnen, als der Bedieneinheit.

Die Verfahrensaufgabe wird gelöst durch ein Verfahren zur Adaption einer Bedienvorrichtung, aufweisend zwei oder mehr nebeneinander angeordnete Bedienbereiche, die jeweils mindestens ein manuell bedienbares körperliches Bedienelement aufweisen, insbesondere gemäß einem der vorangegangenen Ansprüche, aufweisend die Schritte: a) Identifikation einer angekoppelten Arbeitsvorrichtung mittels einer Erkennungsvorrichtung, b) Auswahl der für die angekoppelte Arbeitsvorrichtung benötigten Bedienfunktionen aus einer Gruppe von für jede Arbeitsvorrichtung hinterlegten Grundfunktionen, c) Hierarchisieren der ausgewählten Bedienfunktionen nach Anwendungshäufigkeit und d) Zuordnen der anwendungshäufigsten Bedienfunktion an das Bedienelement des ersten Bedienbereichs sowie der absteigend anwendungshäufigsten weiteren Bedienfunktionen an die jeweils nach stärkerer Rotation bedienbar erreichbaren Bedienbereiche.

Diese Schritte sind nicht zwingend sukzessiv und unmittelbar aufeinanderfolgend in dieser Reihenfolge und auszuführen, erfindungsgemäß können auch einige davon parallel oder in invertierter Reihenfolge erfolgen oder von anderen, noch nicht erwähnten Verfahrensschritten gefolgt sein. Hierbei steht vorzugsweise jedoch stets die Identifikation an erster Stelle der Verfahrensschritte. Diese kann erfindungsgemäß manuell durch eine irgendwie geartete Eingabe oder Auswahl aus einer angezeigten Liste von Arbeitsvorrichtungen erfolgen oder automatisch durch beispielsweise ein RFID-Tag oder andere Kommunikationsmöglichkeiten zwischen Arbeitsgerät und Bedienvorrichtung.

Gemäß eines weiteren Schritts des erfindungsgemäßen Verfahrens wird eine Anzahl von für die erkannte Arbeitsvorrichtung benötigten Grundfunktionen ausgewählt, beispielsweise Heben-Senken-Rotieren im Fall eines Pfluges, und entsprechend ihrer Häufigkeit im Benutzungsfall hierarchisiert. Hierfür greift das erfindungsgemäße Verfahren auf eine zuvor erstellte Datenbank zurück, die für sämtliche Typen von Arbeitsvorrichtungen die jeweiligen Funktionen und deren Häufigkeiten beim Einsatz der Arbeitsvorrichtung enthält. Vor der Anwendung des erfindungsgemäßen Verfahrens sind daher die Schritte des Ermittelns dieser Funktionen und deren Häufigkeit durchzuführen, wobei letzteres deutlich aufwendiger ist. Diese Daten sind in einer Datenbank hinterlegt, auf die das Verfahren zurückgreift.

In Weiterbildung des Verfahrens ist vorgesehen, dass die Bedienelemente in Abhängigkeit der zugeordneten Bedienfunktion verändert werden in ihren Freiheitsgraden, im Maß ihrer Auslenkung, in der für eine Auslenkung benötigten Kraft, in ihrer Betriebsbereitschaft, in ihrer Lage im jeweiligen Bedienbereich. Die Vorteile wurden bereits geschildert, da so ein einziges Bedienelement an viele Funktionen und Arbeitsvorrichtungen angepaßt wird und dem Benutzer nur diejenigen Bewegungen des Bedienelements zur Verfügung stehen, die er für die konkrete Arbeitsvorrichtung benötigt. Dies schließt aus oder minimiert Fehlbedienungen.

Schließlich ist in Weiterbildung noch vorgesehen, dass in oder nach Schritt d) die einem Bedienelement zugeordnete Funktion auf einer Anzeige angezeigt wird.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: eine schematische Darstellung eines erfindungsgemäßen adaptiven Bediensystems und
- Fig. 2:: ein schematisches Ablaufdiagramm eines erfindungsgemäßen Verfahrens.

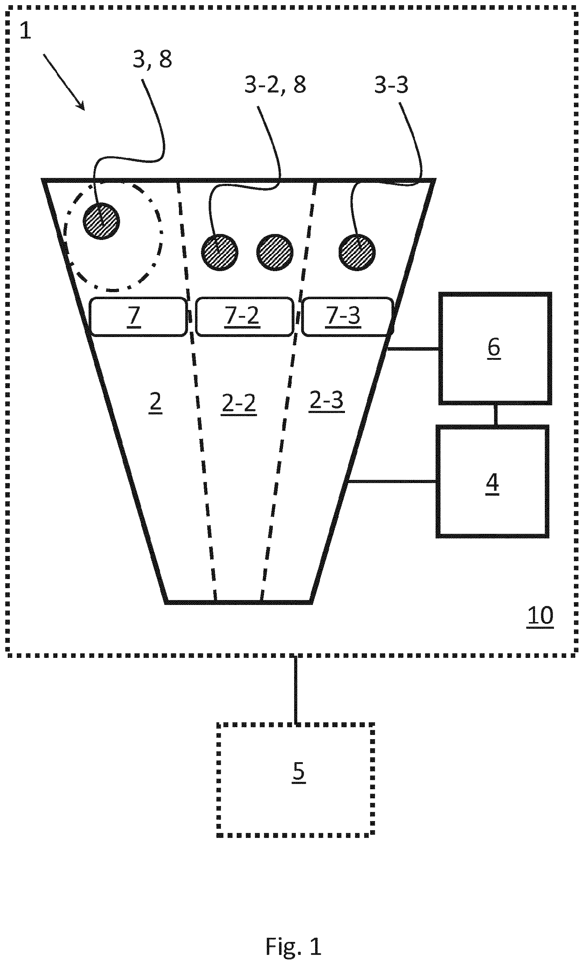

**Fig. 1** zeigt eine Ausführungsform einer erfindungsgemäßen adaptiven Bedienvorrichtung 1, angeordnet in einem schematisch dargestellten Traktor 10, der wiederum mit einer schematisch dargestellten Arbeitsvorrichtung 5 wirkmäßig verbunden ist. Die adaptive Bedienvorrichtung 1 weißt mehrere Bedienbereiche 2 auf, die jeweils ein oder mehr Bedienelemente 3 aufweisen und die hier unmittelbar aneinandergrenzend nach Art von Kreissegmenten, bzw. in einer trapezartigen Form angeordnet sind. Erfindungsgemäß kann die gesamte Bedienvorrichtung 1 ein einstückiges, einheitliches Gehäuse aufweisen, so dass die Trennung in unterschiedliche Bedienbereiche mehr eine ist, die auf einem Drehwinkel eines Benutzerarms zurückgeht und nicht tatsächlich gegenständlich ausgeführt ist. Damit ist jede Form, die eine solche Drehung ermöglicht erfindungsgemäß, also insbesondere jede Form, die einen schmaleren und einen von einem Benutzer weiter entfernten, breiteren Bereich aufweist.

Ein Bedienbereich 2 weist dabei mindestens ein Bedienelement 3 auf, vorzugsweise mehrere Bedienelemente 3 wie dargestellt, die auch zumindest teilweise als Joystick 8 ausgebildet sein können. Diese Bedienelemente 3 sind erfindungsgemäß in ihrer Bedienbewegung veränderbar, nämlich in Abhängigkeit einer aktuell an dem Traktor, in dem sich die Bedienvorrichtung 1 befindet, angekoppelten Arbeitsvorrichtung. Das heißt, dass das oder die Bedienelemente 3 in ihrer zugeordneten Bedienfunktion verändert sind, beispielsweise in ihren Freiheitsgraden der Bewegung, im Maß ihrer Auslenkung, in der für eine Auslenkung benötigten Kraft, in ihrer Betriebsbereitschaft, in ihrer Lage im jeweiligen Bedienbereich. Mit besonders großem Vorteil sind Joysticks als Bedienelemente 3 derart anpassbar, aber auch Daumenräder oder drehbare Regler, bzw. Schalter sind entsprechend anpassbar. Gerade bei drehbaren Reglern kann beispielsweise eine Drehrichtung gesperrt oder begrenzt werden, sofern diese entsprechend ausgerüstet sind. Schalter können eingezogen werden und somit nicht länger bedienbar sein.

Ebenfalls schematisch dargestellt sind eine Erkennungsvorrichtung 4 und eine Konfigurationsvorrichtung 6, die daten- und wirkmäßig mit der adaptiven Bedienvorrichtung verbunden ausgebildet sind. Insbesondere nicht dargestellt sind Datenbank, Rechner, Eingabeeinheit als oder als Teil der Erkennungsvorrichtung 4.

Der Benutzer muß sich mit diesem erfindungsgemäßen neuen Konzept jedoch erst vertraut machen. Bislang war ein bestimmtes Bedienelement streng einer bestimmten Traktorfunktion zugeordnet. Die Erfindung löst diese strenge Beziehung völlig und ordnet nun einem Bedienelement ganz unterschiedliche Traktorfunktionen zu, in Abhängigkeit und je nach angekoppelter Arbeitsvorrichtung. Stattdessen findet erfindungsgemäß eine Priorisierung nach Anwendungshäufigkeit dieser Funktion statt, so dass die häufigsten Anwendungen denjenigen Bedienelementen zugeordnet werden, die räumlich am nächsten an einer Ruheposition eines Bedienerarms liegen, so dass eine möglichst entspannte Bedienung ohne große Auslenkung in den Arm- bzw. Handgelenken und möglichst auch ohne große Muskelanspannung ermöglicht ist.

Es ist ebenfalls erfindungsgemäß, dem adaptiven Bedienelement nicht nur Traktorfunktionen des Betriebs der Arbeitsvorrichtung zuzuordnen, sondern auch diejenigen des eigentlichen Fahrbetriebs, wobei dies nicht scharf voneinander trennbar ist. Beispielsweise ist auch eine Zuordnung der Funktionen Standgas und/oder Fahrgeschwindigkeit, die je nach Arbeitsvorrichtung und/oder Arbeitssituation unterschiedlich sein können, einem Bedienelement zuordenbar. Dies gilt ggf. auch für Lenkfunktionen oder Fahrtrichtungswahl.

Erfindungsgemäß ist damit ein einziges Bedienelement an viele Funktionen und damit an Arbeitsvorrichtungen anpassbar, wobei insbesondere dem Benutzer nur diejenigen Bewegungen des Bedienelements zur Verfügung stehen, die er für die konkrete Arbeitsvorrichtung benötigt. Dies schließt aus oder minimiert Fehlbedienungen.

Je ein Anzeigeelement 7 ist bei dieser Ausführungsform pro Bedienbereich 2 vorgesehen. Dieses zeigt einem Benutzer beispielsweise die Arbeitsvorrichtung und dessen dem Bedienelement zugeordnete Funktion an, beispielsweise in Form eines Piktogramms.

In **Fig. 1** sind dabei die hierarchisch absteigenden Zuordnungen mit Bindestrichen angefügt, also beispielsweise die Bedienbereiche als 2, 2-2, 2-3, ... 2-n bezeichnet, entsprechende Bedienelemente mit 3, 3-2, 3-3, ... 3-n.

Zu erkennen ist in **Fig. 1** auch, dass diese Bedienbereiche 2, 2-2, 2-n voneinander haptisch abgegrenzt sein können, was durch eine jeweils dazwischen angeordnete gestrichelte Linie angedeutet ist. Diese Linie symbolisiert beispielsweise eine leichte Aufwölbung der Oberfläche, einen abgerundeten Steg oder steht für unterschiedliche Oberflächenstrukturen in benachbarten Bedienbereichen. Auch eine unterschiedliche Farbgebung der Bereiche ist erfindungsgemäß. Ebenfalls möglich sind Erhebungen, die einer hohlen Hand nachempfunden sind, was als strichpunktierte Linie angedeutet ist.

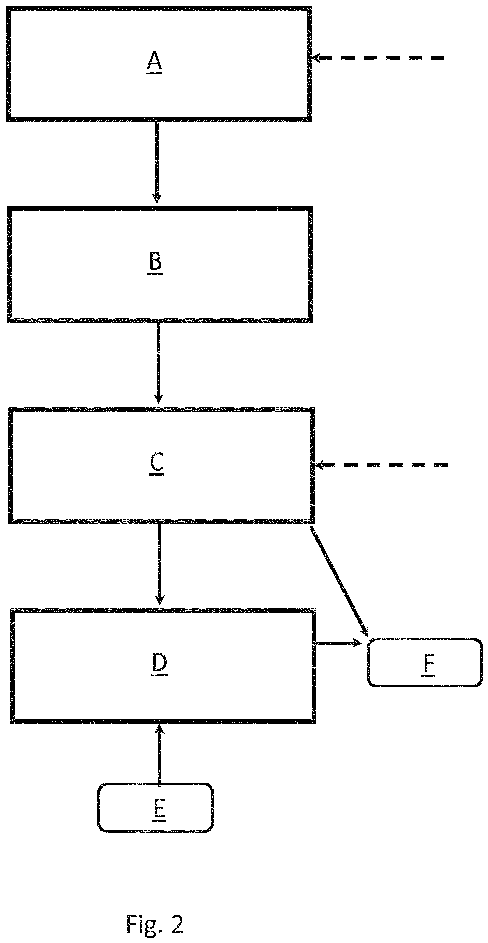

**Fig. 2** zeigt ein schematisches Ablaufdiagramm eines erfindungsgemäßen Verfahrens.

In einem ersten Schritt A erfolgt eine Identifikation einer angekoppelten Arbeitsvorrichtung mittels einer Erkennungsvorrichtung. Diese Erkennungsvorrichtung kann, wie geschildert, im einfachsten Fall der Benutzer selber sein, der an einer Eingabeeinheit die Art und ggf. das Modell der Arbeitsvorrichtung eingibt, so dass diese erkannt ist. Dieser Eingriff/Eingabe ist als gestrichelter Pfeil angedeutet. Hierzu ist eine Datenbank hinterlegt, auf die das Verfahren zurückgreift. Diese Datenbank enthält bevorzugt Angaben zu Art, Typ und Funktionen des Arbeitsgeräts sowie deren Priorisierung nach Häufigkeit der Anwendung während des Betriebs. In einem Schritt B werden dann die für die angekoppelte Arbeitsvorrichtung benötigten Bedienfunktionen aus einer Gruppe von Grundfunktionen ausgewählt, die diese Arbeitsvorrichtung aufweist. In einem weiteren Schritt C erfolgt eine Hierarchisierung der ausgewählten Bedienfunktionen nach Anwendungshäufigkeit und D eine Zuordnung der anwendungshäufigsten Bedienfunktion an das oder die Bedienelemente des ersten Bedienbereichs sowie der absteigend anwendungshäufigsten weiteren Bedienfunktionen an die jeweils nach stärkerer Rotation bedienbar erreichbaren Bedienbereiche. Hierbei ist Schritt C bevorzugt bereits bei Erstellung einer Datenbank erfolgt, so dass diese Hierarchisierung nurmehr abgerufen werden muß. Auch hier kann erfindungsgemäß ein manuelles Eingreifen eines Benutzers vorgesehen sein, der diese Hierarchisierung nach seinen Wünschen abändert. Dieser Eingriff ist als gestrichelter Pfeil angedeutet.

Diese Schritte folgend nicht zwingend unmittelbar aufeinander, auch kann ein Schritt einer manuellen Zuordnung einer Funktion zu einem bestimmten Bedienelement vorgesehen sein. Dies wird immer dann relevant sein, wenn ein Benutzer aus Gewohnheit oder körperlichen Gegebenheiten eine bestimmte Funktion einem bestimmten Bedienelement zuordnen möchte, beispielsweise, wenn er dieses besonders einfach erreichen kann. So können Hand- und Fingerlängen oder auch fehlenden Fingergliedern Rechnung getragen werden. Dies erfolgt in einem optionalen Schritt E, der zusätzlich oder ergänzend zu Schritt D erfolgen kann.

Erfindungsgemäß werden bei dem Verfahren die Bedienelemente in Abhängigkeit der zugeordneten Bedienfunktion in ihren Freiheitsgraden, im Maß ihrer Auslenkung, in der für eine Auslenkung benötigten Kraft, in ihrer Betriebsbereitschaft, in ihrer Lage im jeweiligen Bedienbereich verändert.

Eine Anzeige in oder nach Schritt D einer einem Bedienelement zugeordneten Funktion ist ebenfalls Teil einer Ausführungsform des Verfahrens und ist als E bezeichnet.

### BEZUGSZEICHENLISTE

- 1: Adaptive Bedienvorrichtung
- 2: Bedienbereich
- 3: Bedienelement
- 4: Erkennungsvorrichtung
- 5: Arbeitsvorrichtung
- 6: Konfigurationsvorrichtung
- 7: Anzeigeelement
- 8: Joystick

## Patentansprüche

1. Adaptive Bedienvorrichtung (1) für landwirtschaftliche Traktoren, aufweisend zwei oder mehr Bedienbereiche (2), wobei jeder Bedienbereich (2) mindestens ein manuell bedienbares körperliches Bedienelement (3) aufweist, wobei die Bedienvorrichtung (1) eine Erkennungsvorrichtung (4) aufweist, die die Art einer an den Traktor im Benutzungsfall angekoppelten Arbeitsvorrichtung (5) erkennend ist, wobei die Bedienvorrichtung (1) weiter eine mit der Erkennungsvorrichtung (4) zusammenwirkende Konfigurationsvorrichtung (6) aufweist, die die Funktionalität eines Bedienelements (3) und/oder eines Bedienbereiches (2) in Abhängigkeit von der Art der angekoppelten Arbeitsvorrichtung (5) konfigurierend ist, wobei die Bedienvorrichtung (1) weiter mindestens ein Anzeigeelement (7) aufweist, das im Benutzungsfall eine Konfiguration eines Bedienbereichs (2) anzeigend ist,
**dadurch gekennzeichnet, dass**
je nach Konfiguration wenigstens ein Bedienelement (3) in seiner räumlichen Lage veränderbar und/oder in Richtung und/oder Umfang seiner Bewegung konfigurierbar ist.

2. Adaptive Bedienvorrichtung gemäß Anspruch 1, **dadurch gekennzeichnet, dass** ein erster Bedienbereich (2-1) so konfiguriert ist, dass dessen mindestens eines Bedienelement (3-1) die arbeitsvorrichtungstypisch am häufigsten anfallenden Bedienbewegungen steuernd ist und dass ein zweiter und jeder weitere Bedienbereich (2-2, 2-3,...,2-n) so konfiguriert sind, dass dessen jeweilige eine oder mehrere Bedienelemente (3-2, 3-3,...3-n) die arbeitsvorrichtungstypisch am zweithäufigsten, dritthäufigsten, n-häufigsten anfallenden Bedienbewegungen steuernd sind.

3. Adaptive Bedienvorrichtung (1) gemäß Anspruch 1 oder 2, **dadurch gekennzeichnet, dass** die Bedienbereiche (3) als benachbarte, insbesondere kreissegmentartige, Bereiche ausgebildet sind, insbesondere derart, dass sie für einen Benutzer im Benutzungsfall durch Rotation im Ellenbogengelenk und/oder Handgelenk bedienbar erreichbar angeordnet sind.

4. Adaptive Bedienvorrichtung (1) gemäß einem der vorherigen Ansprüche **dadurch gekennzeichnet, dass** der erste Bedienbereich (2-1), insbesondere dessen Bedienelement (3-1), von einer nicht rotierten Position eines Bedienerarms aus bedienbar erreichbar ist und/oder dass zweite, dritte oder weitere Bedienbereiche (2-2, 2-3, 2-n) mit jeweils stärkerer Rotation bedienbar erreichbar ausgebildet sind.

5. Adaptive Bedienvorrichtung (1) gemäß einem der vorherigen Ansprüche **dadurch gekennzeichnet, dass** jeder Bedienbereich (3) ein Anzeigeelement (7) aufweist.

6. Adaptive Bedienvorrichtung (1) gemäß einem der vorherigen Ansprüche **dadurch gekennzeichnet, dass** sie wenigstens einen Joystick (8) aufweist.

7. Adaptive Bedienvorrichtung (1) gemäß einem der vorherigen Ansprüche **dadurch gekennzeichnet, dass** je nach Konfiguration wenigstens ein Bedienelement (3) in seiner Funktion ein- oder ausschaltbar ist.

8. Adaptive Bediensystem (1) gemäß einem der vorherigen Ansprüche, **dadurch gekennzeichnet, dass** ein konfigurierbares Bedienelement (3) eine Funktion aufweisend ist, gewählt aus der Gruppe gebildet durch die Grundfunktionen: vor/zurück, rechts/links, hoch/runter, an/aus, offen/zu, mehr/weniger, im Uhrzeigersinn oder gegen den Uhrzeigersinn rotieren/schwenken.

9. Verfahren zur Adaption eines Bediensystems (1) für landwirtschaftliche Traktoren, aufweisend zwei oder mehr nebeneinander angeordnete Bedienbereiche (2), die jeweils mindestens ein manuell bedienbares körperliches Bedienelement (3) aufweisen, insbesondere gemäß einem der vorangegangenen Ansprüche, aufweisend die Schritte:
a. Identifikation einer angekoppelten Arbeitsvorrichtung (5) mittels einer Erkennungsvorrichtung (4),
b. Auswahl der für die angekoppelte Arbeitsvorrichtung (5) benötigten Bedienfunktionen aus einer Gruppe von Grundfunktionen,
c. Hierarchisieren der ausgewählten Bedienfunktionen nach Anwendungshäufigkeit und
d. Zuordnen der anwendungshäufigsten Bedienfunktion an das Bedienelement (3-1) des ersten Bedienbereichs (2-1) sowie der absteigend anwendungshäufigsten weiteren Bedienfunktionen an die jeweils nach stärkerer Rotation bedienbar erreichbaren Bedienbereiche (2-2, 2-n).

10. Verfahren gemäß Anspruch 9, bei dem die Bedienelemente (3) in Abhängigkeit der zugeordneten Bedienfunktion verändert werden in ihren Freiheitsgraden, im Maß ihrer Auslenkung, in der für eine Auslenkung benötigten Kraft, in ihrer Betriebsbereitschaft, in ihrer Lage im jeweiligen Bedienbereich.

11. Verfahren gemäß einem der Ansprüche 9 oder 10, bei dem in oder nach Schritt d) die einem Bedienelement (3) zugeordnete Funktion auf einer Anzeige angezeigt wird.

## Claims

1. Adaptive operating device (1) for agricultural tractors, having two or more operating areas (2), wherein each operating area (2) has at least one manually operated physical operating element (3), wherein the operating device (1) has a detection device (4), which detects the type of working device (5) coupled to the tractor when in use, wherein the operating device (1) further has a configuration device (6) cooperating with the detection device (4), which configuration device (6) configures the functionality of an operating element (3) and/or an operating area (2) depending on the type of coupled working device (5), wherein the operating device (1) further has at least one display element (7), which displays a configuration of an operating area (2) when in use, **characterized in that** depending on the configuration, at least one operating element (3) can be modified in its spatial position and/or can be configured in the direction and/or extent of its movement.

2. Adaptive operating device according to Claim 1, **characterized in that** a first operating area (2-1) is configured in such a way that its at least one operating element (3-1) controls the operating movements that typically occur most frequently in the working device and **in that** a second and every further operating area (2-2, 2-3,...,2-n) are configured in such a way that its respective one or more operating elements (3-2, 3-3,...,3-n) control the operating movements that typically occur second-most frequently, third-most frequently, n-most frequently in the working device.

3. Adaptive operating device (1) according to Claim 1 or 2, **characterized in that** the operating areas (3) are designed as adjacent, in particular circular segment-like areas, in particular in such a way that they are arranged so that they can be operated by a user in the case of use by rotating the elbow joint and/or wrist.

4. Adaptive operating device (1) according to one of the preceding claims, **characterized in that** the first operating area (2-1), in particular its operating element (3-1), can be operated from a non-rotating position of an operating arm, and/or **in that** second, third or further operating areas (2-2, 2-3, 2-n) are designed to be operated with respectively greater rotation.

5. Adaptive operating device (1) according to one of the preceding claims, **characterized in that** each operating area (3) has a display element (7).

6. Adaptive operating device (1) according to one of the preceding claims, **characterized in that** it has at least one joystick (8).

7. Adaptive operating device (1) according to one of the preceding claims, **characterized in that** depending on the configuration, at least one operating element (3) can be switched on or off in its function.

8. Adaptive operating system (1) according to one of the preceding claims, **characterized in that** a configurable operating element (3) has a function, selected from the group formed by the basic functions: forward/back, right/left, up/down, on/off, open/closed, more/less, rotating/pivoting clockwise or anticlockwise.

9. Method for adapting an operating system (1) for agricultural tractors, having two or more operating areas (2) arranged next to each other, which respectively have at least one manually operated physical operating element (3), in particular in accordance with one of the preceding claims, having the steps:
a. identifying a coupled working device (5) by means of a detection device (4),
b. selecting the operating functions required for the coupled working device (5) from a group of basic functions,
c. hierarchizing the selected operating functions according to frequency of use and
d. assigning the most frequently used operating function to the operating element (3-1) of the first operating area (2-1) as well as the most frequently used further operating functions in descending order to the operating areas (2-2, 2-n) that can be respectively operated after greater rotation.

10. Method according to Claim 9, in which the operating elements (3) are modified in their degrees of freedom, in the extent of their deflection, in the force required for a deflection, in their operational readiness and in their position in the respective operating area depending on the assigned operating function.

11. Method according to either of Claims 9 or 10, in which in or after step d) the function assigned to an operating element (3) is displayed on a display.

## Revendications

1. Dispositif de commande adaptatif (1) pour tracteurs agricoles, présentant deux ou plus zones de commande (2), dans lequel chaque zone de travail (2) comporte au moins un élément de commande physique (3) actionnable manuellement, dans lequel le dispositif de commande (1) présente un dispositif de reconnaissance (4) qui reconnaît le type de dispositif de travail (5) couplé au tracteur lors de son utilisation, dans lequel le dispositif d'actionnement (1) présente en outre un dispositif de configuration (6) coopérant avec le dispositif de détection (4), ayant la fonctionnalité d'un élément de commande (3) et/ou d'une zone de commande (2) selon le type de dispositif de travail couplé (5), dans lequel le dispositif de commande (1) présente en outre au moins un élément d'affichage (7), qui, lors de son utilisation, indique une configuration d'une zone de commande (2), **caractérisé en ce que** selon la configuration au moins un élément de commande (3) peut être modifié en termes de position spatiale et/ou peut être configuré en termes de direction et/ou d'étendue de son mouvement.

2. Dispositif de commande adaptatif selon la revendication 1, **caractérisé en ce qu'**une première zone de commande (2-1) est configurée de telle manière que son au moins un élément d'actionnement (3-1) commande les mouvements de fonctionnement typiques de l'appareil de travail qui se produisent le plus fréquemment et qu'une deuxième et chaque zone de fonctionnement supplémentaire (2-2, 2-3,...,2-n) sont configurées de telle manière que leurs un ou plusieurs éléments d'actionnement respectifs (3-2, 3-3,...,3-n) commandent les deuxièmes les plus fréquents, les troisièmes les plus fréquents, les n les plus fréquents mouvements d'actionnement typiques de l'appareil de travail.

3. Dispositif de commande adaptatif (1) selon la revendication 1 ou 2, **caractérisé en ce que** les zones de commande (3) sont conçues comme des zones adjacentes, notamment sous forme de segments de cercle, notamment de telle sorte qu'elles soient agencées pour être accessibles et actionnables à un utilisateur lors de leur utilisation par rotation dans l'articulation du coude et/ou du poignet.

4. Dispositif de commande adaptatif (1) selon une quelconque des revendications précédentes, **caractérisé en ce que** la première zone de commande (2-1), notamment son élément d'actionnement (3-1), est conçue pour être accessible et actionnable d'une position tournée du bras d'un utilisateur et/ou que la deuxième, la troisième ou d'autres zones de travail (2-2, 2-3, 2-n) sont conçues pour être accessibles et actionnables à chaque rotation plus forte.

5. Dispositif de commande adaptatif (1) selon une quelconque des revendications précédentes, **caractérisé en ce que** chaque zone de commande (3) présente un élément d'affichage (7).

6. Dispositif de commande adaptatif (1) selon une des revendications précédentes, **caractérisé en ce qu'**il présente au moins un joystick (8).

7. Dispositif de commande adaptatif (1) selon une des revendications précédentes, **caractérisé en ce que**, selon la configuration, au moins un élément de commande (3) peut être allumé ou éteint au niveau de sa fonction.

8. Système de commande adaptatif (1) selon une quelconque des revendications précédentes, **caractérisé en ce qu'**un élément de commande configurable (3) a une fonction choisie dans le groupe formé par les fonctions de base : avant/arrière, droite/gauche, haut/bas, on/off, ouvrir/fermer, plus/moins, rotation/ pivotement en sens horaire ou antihoraire.

9. Procédé d'adaptation d'un système de commande (1) pour tracteurs agricoles, présentant deux ou plusieurs zones de travail (2) disponibles les unes à côté des autres, qui présentent respectivement au moins un élément de commande physique (3) actionnable manuellement, notamment selon une des revendications précédentes, comportant les étapes de :
a. Identification d'un dispositif de travail couplé (5) au moyen d'un dispositif de reconnaissance (4),
b. Sélection des fonctions d'exploitation requises pour le dispositif de travail couplé (5) dans un groupe de fonctions de base,
c. Hiérarchisation des fonctions d'exploitation sélectionnées selon la fréquence d'utilisation et
d. Affectation de la fonction de commande la plus fréquemment utilisée à l'élément de commande (3-1) de la première zone de commande (2-1) et des autres fonctions de commande les plus fréquemment utilisées par ordre décroissant aux zones de commande (2-2, 2-n) pouvant être commandées après une plus forte rotation.

10. Procédé selon la revendication 9, dans lequel les éléments de commande (3) sont modifiés en fonction de la fonction de commande attribuée en termes de degrés de liberté, de l'étendue de leur déviation, de la force nécessaire à la déviation, de leur disponibilité opérationnelle, respectivement de leur position dans la zone de commande respective.

11. Procédé selon une des revendications 9 ou 10, dans lequel, à ou après l'étape d), la fonction affectée à un élément de commande (3) est affichée sur un écran.
